# EUROPEAN PATENT SPECIFICATION

(11) **EP 4 483 076 B1**
(45) Date of publication and mention of the grant of the patent: **13.05.2026**
(21) Application number: 23704934.1
(22) Date of filing: 10.02.2023
(51) Int. Cl.: F16H 59/04, G01D 18/00

(54) **A CONTROLLER AND METHOD FOR ADAPTING AGING OF A QUICK SHIFT SENSOR IN A VEHICLE**
STEUERGERÄT UND VERFAHREN ZUR ANPASSUNG DER ALTERUNG EINES SCHNELLSCHALTSENSORS IN EINEM FAHRZEUG
DISPOSITIF DE COMMANDE ET PROCÉDÉ POUR ADAPTER LE VIEILLISSEMENT D'UN CAPTEUR DE CHANGEMENT DE VITESSE RAPIDE DANS UN VÉHICULE

(30) Priority: 25.02.2022 IN 202241010168
(43) Date of publication of application: 01.01.2025
(73) Proprietor: Robert Bosch GmbH, 70442 Stuttgart (DE); Bosch Limited, Adugodi, Bangalore 560 030 (IN)
(72) Inventor: SABU, Cheradiyaniyil Abhijith, Karnataka, Bangalore 560068 (IN); DUSI SETLUR, Srikanth, Karnataka, Bangalore 560100 (IN); KUMAR, Hemant, Ajmer Rajasthan 305003 (IN); KUSHAL, Agarwal, Karnataka, Bangalore 560070 (IN)
(74) Representative: Bee, Joachim
(86) International application number: PCT/EP2023/053339
(87) International publication number: WO 2023/161042

(56) References cited:
- EP-A1- 3 800 381
- EP-A1- 3 800 381
- EP-A2- 2 674 354
- EP-A2- 2 674 354
- DE-A1- 102018 128 867
- DE-A1- 102018 128 867

## Description

### Field of the invention:

The present invention relates to a controller and a method for adapting aging of a quick shift sensor in a vehicle.

### Background of the invention:

A patent literature IN 202017010595 discloses a gear-position learning device for automatic clutch transmission. A gear-position learning device for an automatic clutch transmission includes a transmission configured to be shifted by an operation of a driver of a vehicle, a clutch device disposed in a transmission path between the transmission and an engine and configured to be connected and disconnected by actuation of a clutch actuator, a controller configured to control connection and disconnection of the clutch device performed by the clutch actuator, a shift drum configured to rotate according to a shift operation that the driver performs on a shift operator and switch the shift stage of the transmission, and a rotational position defining mechanism configured to define a rotational position of the shift drum, wherein the controller has a learning mode for learning a rotation angle of the shift drum and is configured to control connection and disconnection of the clutch device during the learning mode such that the shift drum is at a rotational position determined by the rotational position defining mechanism Document EP3800381A1 shows an example of a controller.

### Brief description of the accompanying drawings:

An embodiment of the invention is described with reference to the following accompanying drawing,
Fig. 1 illustrates a block diagram of a controller to adapt aging of a quick shift sensor, according to an embodiment of the present invention;
Fig. 2 illustrates a basic graphs of adapting the quick shift sensor to the actual values, according to an embodiment of the present invention, and
Fig. 3 illustrates a method for adapting aging of the quick shift sensor, according to the present invention.

### Detailed description of the embodiments:

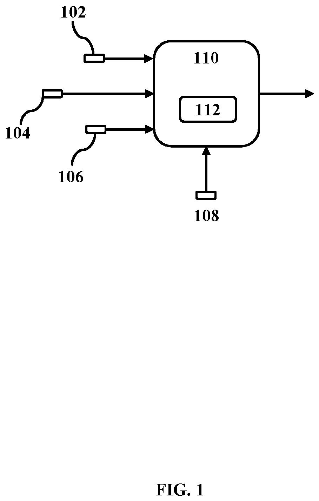

Fig. 1 illustrates a block diagram of a controller to adapt aging of a quick shift sensor, according to an embodiment of the present invention. The quick shift sensor 102 mounted on any one of a gear shift pedal, a shift shaft of a gearbox and linkages therebetween. The controller 110 configured to receive input signal from the quick shift sensor 102, compare an actual value detected from the input signal with threshold value for any one of upshift request and downshift request, and trigger quick shift functionality. The quick shift functionality corresponds to modulation of engine torque by the controller 110 without disengaging a clutch between an engine and the gearbox of the vehicle. The controller 110, characterized in that, configured to detect no load condition of the quick shift sensor 102, and measure the actual value from the quick shift sensor 102 upon detection of the no load condition, and calculate deviation of the actual value from a reference value of the quick shift sensor 102. The controller 110 then adapts the reference value and the threshold value as per the calculated deviation. The actual value corresponds to the present value detected after every use of the quick shift sensor 102. The modulation of engine torque is performed by the controller 110 through at least one of an ignition control using the spark plug system, a throttle control using the Electronic Throttle Control (ETC) system and a fuel injection control using the fuel injection system. The term aging corresponds to wear and tear or regular use due to which the quick shift sensor 102 undergoes deterioration in detecting corresponding parameter.

In accordance to the present invention, the controller 110 comprises the memory element 112 such as Random Access Memory (RAM) and/or Read Only Memory (ROM), Analog-to-Digital Converter (ADC) and a Digital-to-Analog Convertor (DAC), clocks, timers and at least one processor (capable of implementing machine learning) connected with each other and to other components through communication bus channels. The memory element 112 is prestored with logics or instructions or programs or applications or modules and threshold values, reference values and conditions which is/are accessed by the processor as per the defined routines. The reference value corresponds to value of the quick shift sensor 102 at rest or default state. The internal components of the controller 110 are not explained for being state of the art, and the same must not be understood in a limiting manner. The controller 110 may also comprise communication units to communicate with the cloud server through wireless or wired means such as Global System for Mobile Communications (GSM), 3G, 4G, 5G, Wi-Fi, Bluetooth, Ethernet, serial networks, and the like.

In accordance to an embodiment of the present invention, the controller 110 is at least one of an internal control unit and an external control unit. The internal control unit is any one of an Engine Management System (EMS) control unit and an Engine control Unit (ECU). The external control unit is a control unit externally interfaced with the controller 110. In an embodiment, the internal control unit takes the functionality of self-adaptation described later. Alternatively, the external control unit interfaced with the internal control unit takes the functionality of the self-adaptation.

According to the present invention, the controller 110 is preferably for a geared motorcycle. However, the controller 110 is applicable to be implemented for other geared vehicles as well such as other motorcycle type two-wheelers, auto-rickshaws, cars, snowmobiles, water sport vehicles and the like.

According to an embodiment of the present invention, the controller 110 is configured to enable self-adaptation of the quick shift sensor 102 to the aging/wear. The no load condition comprises a post drive cycle of the vehicle. The post drive cycle is detected from a key OFF event of the vehicle. The no load condition further comprises at least one selected from a group comprising a gear position at a neutral position, a side stand/main stand status as activated and a zero vehicle speed. The gear position is detected by a gear position sensor 104, the stand status is detected by a stand switch sensor 106 and the vehicle speed is detected from a speed sensor 108. The sensors listed are used based on the availability in the vehicle.

In accordance to an embodiment of the present invention, a plurality of the actual values are processed together before the adaptation of the reference value and the threshold value. The plurality of actual values are stored in the memory element 112 of the controller 110.

In accordance to an embodiment of the present invention, the quick shift sensor 102 is any one selected from a group comprising a strain gauge type load sensor, a force sensor, displacement sensor, a rotational sensor, a hall effect sensor and the like which measures the shift intention of a rider/driver.

According to the present invention, a working of the controller 110 is explained and the same must not be understood in limited manner. Consider the vehicle to be a geared motorcycle installed with quick shift sensor 102 on or between the linkages connecting the gear shift pedal and the shift shaft of the gearbox. The rider just stops the vehicle at a parking place after a drive. As the rider switches OFF the vehicle, and removes the key, the status is detected by the controller 110 which is the EMS, as the no load condition. The controller 110 then starts the adaptation process. The controller 110 measures the actual value from the quick shift sensor 102. The controller 110 then calculates the deviation of the actual value from the reference value and then adapts the reference value and the threshold value as per the calculated deviation. In an embodiment, the adaptation is completed if the deviation exceeds the minimum threshold requirement, else the adaptation is skipped.

In an alternate working example, the controller 110 waits for at least one more no load condition along with the post drive cycle. For example, if the controller 110 detects activated state of the main stand or the side stand from a stand switch sensor 106, or detects zero vehicle speed from a wheel or vehicle speed sensor 108, or the gear position is detected to be at neutral using a gear position sensor 104. The additional no load conditions ensures that the adaptation of the quick shift sensor 102 is performed at absolute no load conditions by removing false positives such as foot resting on the gear shift pedal.

In accordance to the present invention, the controller 110 is configured to reduce chance of mislearning due to rider foot being to gear lever during self-adaptation. The controller 110 performs storing learnt actual values into the memory element 112 according to a preset routine (stored in the memory element 112) after a calibratable time delay after KL15 OFF in the post drive cycle. When the learning routine is executed for the quick shift sensor 102, the learning is allowed only if the voltage values are within an upper and lower thresholds.

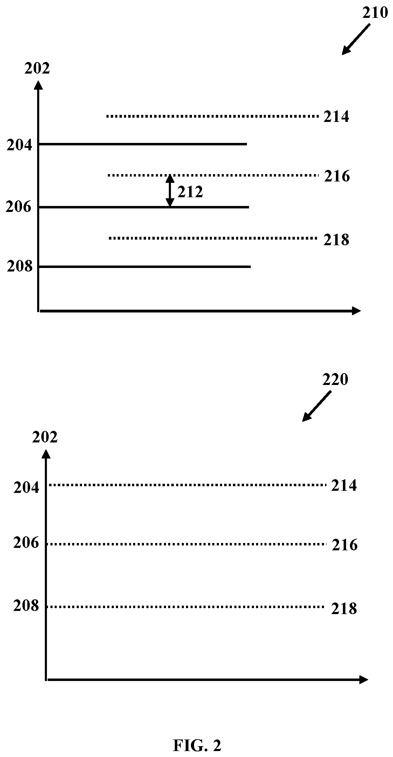

Fig. 2 illustrates a basic graphs of adapting the quick shift sensor to the actual values, according to an embodiment of the present invention. The graphs are simple representation only for the sake of understanding and must not be understood in limiting manner. A first graph 210 represents actual values and reference value of the quick shift sensor 102. A second graph 220 represents adapted values of the quick shift sensor 102. In both the graphs, the Y-axis 202 is values in voltages as generated by the quick shift sensor 102. The X-axis is just a baseline for understanding purpose. In the first graph 210, consider a first line 204 as the upshift threshold value, a second line 206 is the reference value when at rest, and the third line 208 is the downshift threshold value. When the actual value crosses anyone of the upshift threshold value or the downshift threshold value, the quick shift functionality is activated by the controller 110 to complete the gearshift. The first graph 210 shows that the first line 204, the second line 206 and the third line 208 have been shifted to a first dotted line 214, a second dotted line 216 and the third dotted line 218 due to aging or wear and tear. Now, due to this effect, the possibility of detected wrong shift intention by the controller 110 is high as there exists the deviation 212.

With the implementation of the present invention, the controller 110 is enabled to learn and adapt/adjust the deviation 212 so that the wrong shift intention is prevented. As can be seen in the second graph 220, the second line 206 is changed to actual value of the quick shift sensor 102 which is the second dotted line 216. The second line 206 is the default value generated by the quick shift sensor 102 when no load is acting on it. Similarly, the first line 204 is adapted to the first dotted line 214 and the third line 208 is adapted to the third dotted line 218. Now, the controller 110 functions with the aged/worn quick shift sensor 102 without any wrong shift detection.

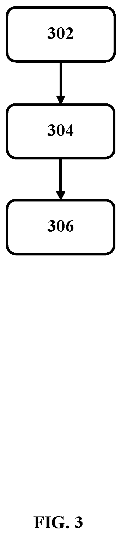

Fig. 3 illustrates a method for adapting aging of the quick shift sensor in the vehicle, according to the present invention. The vehicle comprises the quick shift sensor 102, which is mounted on any one of the gear shift pedal, the shift shaft of the gearbox and the linkages therebetween. The controller 110 configured to receive input signal from the quick shift sensor 102, compare the actual value detected from the input signal with threshold value for any one of upshift request and downshift request, and trigger quick shift functionality. The quick shift functionality corresponds to modulation of engine torque by the controller 110 without disengaging the clutch between the engine and the gearbox of the vehicle. The method comprises a step 302 which involves detecting no load condition of the quick shift sensor 102. A step 304 comprises measuring the actual value from the quick shift sensor 102 upon detecting the no load condition, and calculating deviation of the actual value from the reference value of the quick shift sensor 102. A step 306 comprises adapting the reference value and the threshold value as per the calculated deviation.

According to the method, the no load condition comprises the post drive cycle of the vehicle, where detecting the post drive cycle is performed by monitoring the key OFF event of the vehicle. The no load condition further comprises at least one selected from the group comprising the gear position at a neutral position, the side stand/main stand status as activated and the zero vehicle speed. The gear position is detected by the gear position sensor 104. The stand status is detected by the stand switch sensor 106 and the vehicle speed is detected from the speed sensor 108. The method may comprise processing plurality of the actual values together before adapting the reference value and the threshold value. The plurality of actual values are stored in the memory element 112 of the controller 110. Further, the method is performed by at least one of the internal control unit and the external control unit. The internal control unit is any one of the Engine Management System (EMS) control unit and an Engine control Unit (ECU). The external control unit is the control unit externally interfaced with the controller 110.

According to the present invention, the controller 110 and method for quick shift sensor learning is provided. The present invention is applicable for different types of quick shift sensor 102 such as strain gauge type. The controller 110 and the method eliminates adaptation of unintentional aging behavior, such as there can be situations where the rider keeps foot on the gear pedal, which would be considered as sensor aging/wear. The present invention intelligently avoids the unintentional adaptations. The actual values from the quick shift sensor 102 are averaged over period of time when the gear shift pedal is in rest or neutral position. This is specifically done when the vehicle is standstill condition, gear is in neutral condition , side stand is in parking position and ignition key is in OFF condition. The present invention facilitates a convenient and fun way of shifting gears without clutch engagement. The torque control while upshifting and downshifting achieved through throttle control, fuel injection control and ignition control. The present invention provides comfortable and relaxed riding, less strain for the rider on longer trips, not necessary to meddle with clutch and throttle for all gear shifts and faster gear shift times. The controller 110 and method also provides feasibility to learn and adapt the quick shift sensor 102 tolerances depending on sensor type on routine basis.

## Claims

1. A controller (110) to adapt aging of a quick shift sensor (102) in a vehicle, said quick shift sensor (102) mounted on any one of a gear shift pedal, a shift shaft of a gearbox and linkages therebetween, said controller (110) configured to receive input signal from said quick shift sensor (102), compare an actual value detected from said input signal with threshold value for any one of upshift request and downshift request, and trigger quick shift functionality, said quick shift functionality corresponds to modulation of engine torque by said controller (110) without disengaging a clutch between an engine and said gearbox of said vehicle, **characterized in that,** said controller (110) configured to,
detect no load condition of said quick shift sensor (102), and
measure said actual value from said quick shift sensor (102) upon detection of said no load condition, and calculate deviation of said actual value from a reference value of said quick shift sensor (102), and
adapt said reference value and said threshold value as per said calculated deviation.

2. The controller (110) as claimed in claim 1, wherein said no load condition comprises a post drive cycle of said vehicle, wherein said post drive cycle is detected from a key OFF event of said vehicle.

3. The controller (110) as claimed in claim 2, wherein said no load condition further comprises at least one selected from a group comprising a gear position at a neutral position, a side stand/main stand status as activated and a zero vehicle speed, wherein said gear position is detected by a gear position sensor (104), said stand status is detected by a stand switch sensor (106) and said vehicle speed is detected from a speed sensor (108).

4. The controller (110) as claimed in claim 1, wherein plurality of said actual values are processed together before adaptation of said reference value and said threshold value, wherein said plurality of actual values are stored in a memory element (112) of said controller (110).

5. The controller (110) as claimed in claim 1 is at least one of an internal control unit and an external control unit, wherein said internal control unit is any one of an Engine Management System (EMS) control unit and an Engine control Unit (ECU), and wherein said external control unit is a control unit externally interfaced with said controller (110).

6. A method for adapting to aging of a quick shift sensor (102) in a vehicle, said vehicle comprises said quick shift sensor (102) mounted on any one of a gear shift pedal, a shift shaft of a gearbox and linkages therebetween, and a controller (110) configured to receive input signal from said quick shift sensor (102), compare an actual value detected from said input signal with threshold value for any one of upshift request and downshift request, and trigger quick shift functionality, said quick shift functionality corresponds to modulation of engine torque by said controller (110) without disengaging a clutch between an engine and said gearbox of said vehicle, **characterized by,** said method comprising the steps of:
detecting no load condition of said quick shift sensor (102), and
measuring said actual value from said quick shift sensor (102) upon detecting said no load condition and calculating deviation of said actual value from a reference value of said quick shift sensor (102), and
adapt said reference value and said threshold value as per said calculated deviation.

7. The method as claimed in claim 6, wherein said no load condition comprises a post drive cycle of said vehicle, wherein detecting said post drive cycle is performed by monitoring a key OFF event of said vehicle.

8. The method as claimed in claim 7, wherein said no load condition further comprises at least one selected from a group comprising a gear position at a neutral position, a side stand/main stand status as activated and a zero vehicle speed, wherein said gear position is detected by a gear position sensor (104), said stand status is detected by a stand switch sensor (106) and said vehicle speed is detected from a speed sensor (108).

9. The method as claimed in claim 6, comprises processing plurality of said actual values together before adapting said reference value and said threshold value, wherein said plurality of actual values are stored in a memory element (112) of said controller (110).

10. The method as claimed in claim 6 is performed by at least one of an internal control unit and an external control unit, wherein said internal control unit is any one of an Engine Management System (EMS) control unit and an Engine control Unit (ECU), and wherein said external control unit is a control unit externally interfaced with said controller (110).

## Patentansprüche

1. Steuerung (110) zum Anpassen der Alterung eines Schnellschaltsensors (102) in einem Fahrzeug, wobei der Schnellschaltsensor (102) an einem beliebigen von einem Gangschaltpedal, einer Schaltwelle eines Getriebes und Gestängen dazwischen befestigt ist, wobei die Steuerung (110) dazu ausgelegt ist, ein Eingangssignal von dem Schnellschaltsensor (102) zu empfangen, einen Istwert, der aus dem Eingangssignal detektiert wird, mit einem Schwellenwert für eine Hochschaltanforderung oder eine Herunterschaltanforderung zu vergleichen und eine Schnellschaltfunktionalität auszulösen, wobei die Schnellschaltfunktionalität einer Modulation des Motordrehmoments durch die Steuerung (110) entspricht, ohne eine Kupplung zwischen einem Motor und dem Getriebe des Fahrzeugs auszukuppeln, **dadurch gekennzeichnet, dass** die Steuerung (110) ausgelegt ist zum Erkennen eines lastfreien Zustands des Schnellschaltsensors (102) und Messen des Istwerts von dem Schnellschaltsensor (102) bei Erkennen des lastfreien Zustands und Berechnen der Abweichung des Istwerts von einem Referenzwert des Schnellschaltsensors (102) und
Anpassen des Referenzwerts und des Schwellenwerts gemäß der berechneten Abweichung.

2. Steuerung (110) nach Anspruch 1, wobei der lastfreie Zustand einen Nachfahrzyklus des Fahrzeugs umfasst, wobei der Nachfahrzyklus von einem Schlüsselausschaltereignis des Fahrzeugs detektiert wird.

3. Steuerung (110) nach Anspruch 2, wobei der lastfreie Zustand ferner mindestens eines umfasst, ausgewählt aus einer Gruppe, bestehend aus einer Schaltstellung in einer Neutralstellung, einem Seitenständer/Hauptständer-Status als aktiviert und einer Fahrzeuggeschwindigkeit Null, wobei die Schaltstellung durch einen Schaltstellungssensor (104) erfasst wird, der Ständerstatus durch einen Ständerschaltersensor (106) erfasst wird und die Fahrzeuggeschwindigkeit von einem Geschwindigkeitssensor (108) erfasst wird.

4. Steuerung (110) nach Anspruch 1, wobei mehrere der Istwerte gemeinsam verarbeitet werden, bevor der Referenzwert und der Schwellenwert angepasst werden, wobei die mehreren Istwerte in einem Speicherelement (112) der Steuerung (110) gespeichert werden.

5. Steuerung (110) nach Anspruch 1 ist eine interne Steuereinheit und/oder eine externe Steuereinheit, wobei die interne Steuereinheit eine Motormanage-mentsystem(EMS)-Steuereinheit und/oder eine Motorsteuereinheit (ECU) ist und wobei die externe Steuereinheit eine Steuereinheit ist, die extern mit der Steuerung (110) verbunden ist.

6. Verfahren zum Anpassen der Alterung eines Schnellschaltsensors (102) in einem Fahrzeug, wobei das Fahrzeug den Schnellschaltsensor (102) umfasst, befestigt an einem beliebigen von einem Gangschaltpedal, einer Schaltwelle eines Getriebes und Gestängen dazwischen, und eine Steuerung (110), dazu ausgelegt, ein Eingangssignal von dem Schnellschaltsensor (102) zu empfangen, einen Istwert, der aus dem Eingangssignal detektiert wird, mit einem Schwellenwert für eine Hochschaltanforderung oder eine Herunterschaltanforderung zu vergleichen und eine Schnellschaltfunktionalität auszulösen, wobei die Schnellschaltfunktionalität einer Modulation des Motordrehmoments durch die Steuerung (110) entspricht, ohne eine Kupplung zwischen einem Motor und dem Getriebe des Fahrzeugs auszukuppeln, **dadurch gekennzeichnet, dass** das Verfahren die folgenden Schritte umfasst:
Erkennen eines lastfreien Zustands des Schnellschaltsensors (102) und
Messen des Istwerts von dem Schnellschaltsensor (102) bei Erkennen des lastfreien Zustands und Berechnen der Abweichung des Istwerts von einem Referenzwert des Schnellschaltsensors (102) und
Anpassen des Referenzwerts und des Schwellenwerts gemäß der berechneten Abweichung.

7. Verfahren nach Anspruch 6, wobei der lastfreie Zustand einen Nachfahrzyklus des Fahrzeugs umfasst, wobei das Erfassen des Nachfahrzyklus durch Überwachen eines Schlüsselausschaltereignisses des Fahrzeugs ausgeführt wird.

8. Verfahren nach Anspruch 7, wobei der lastfreie Zustand ferner mindestens eines umfasst, ausgewählt aus einer Gruppe, bestehend aus einer Schaltstellung in einer Neutralstellung, einem Seitenständer/Hauptständer-Status als aktiviert und einer Fahrzeuggeschwindigkeit Null, wobei die Schaltstellung durch einen Schaltstellungssensor (104) erfasst wird, der Ständerstatus durch einen Ständerschaltersensor (106) erfasst wird und die Fahrzeuggeschwindigkeit von einem Geschwindigkeitssensor (108) erfasst wird.

9. Verfahren nach Anspruch 6, umfassend das Verarbeiten mehrerer der Istwerte gemeinsam vor dem Anpassen des Referenzwerts und des Schwellenwerts, wobei die mehreren Istwerte in einem Speicherelement (112) der Steuerung (110) gespeichert werden.

10. Verfahren nach Anspruch 6 wird durchgeführt durch eine interne Steuereinheit und/oder eine externe Steuereinheit, wobei die interne Steuereinheit eine Motormanagementsystem(EMS)-Steuereinheit und/oder eine Motorsteuereinheit (ECU) ist und wobei die externe Steuereinheit eine Steuereinheit ist, die extern mit der Steuerung (110) verbunden ist.

## Revendications

1. Dispositif de commande (110) pour adapter le vieillissement d'un capteur de changement de rapport rapide (102) dans un véhicule, ledit capteur de changement de rapport rapide (102) étant monté sur l'un quelconque d'une pédale de changement de rapport, d'un arbre de changement de rapport d'une boîte de vitesses et de liaisons entre ceux-ci, ledit dispositif de commande (110) étant configuré pour recevoir un signal d'entrée provenant dudit capteur de changement de rapport rapide (102), comparer une valeur réelle détectée provenant dudit signal d'entrée à une valeur seuil pour l'une quelconque d'une demande de passage au rapport supérieur et d'une demande de passage au rapport inférieur, et déclencher une fonctionnalité de changement de rapport rapide, ladite fonctionnalité de changement de rapport rapide correspondant à une modulation de couple moteur par ledit dispositif de commande (110) sans désengager un embrayage entre un moteur et ladite boîte de vitesses dudit véhicule, **caractérisé en ce que** ledit dispositif de commande (110) est configuré pour,
détecter une condition d'absence de charge dudit capteur de changement de rapport rapide (102), et
mesurer ladite valeur réelle provenant dudit capteur de changement de rapport rapide (102) lors de la détection de ladite condition d'absence de charge, et calculer l'écart entre ladite valeur réelle et une valeur de référence dudit capteur de changement de rapport rapide (102), et
adapter ladite valeur de référence et ladite valeur seuil en fonction dudit écart calculé.

2. Dispositif de commande (110) selon la revendication 1, dans lequel ladite condition d'absence de charge comprend un cycle de post-conduite dudit véhicule, dans lequel ledit cycle de post-conduite est détecté à partir d'un événement de coupure du contact dudit véhicule.

3. Dispositif de commande (110) selon la revendication 2, dans lequel ladite condition d'absence de charge comprend en outre au moins un élément choisi parmi un groupe comprenant une position de rapport à une position neutre, un état de béquille latérale/béquille principale activé et une vitesse de véhicule nulle, dans lequel ladite position de rapport est détectée par un capteur de position de rapport (104), ledit état de béquille est détecté par un capteur de commutateur de béquille (106) et ladite vitesse de véhicule est détectée par un capteur de vitesse (108).

4. Dispositif de commande (110) selon la revendication 1, dans lequel une pluralité desdites valeurs réelles sont traitées ensemble avant l'adaptation de ladite valeur de référence et de ladite valeur seuil, dans lequel ladite pluralité de valeurs réelles sont stockées dans un élément de mémoire (112) dudit dispositif de commande (110).

5. Dispositif de commande (110) selon la revendication 1, étant au moins l'une d'une unité de commande interne et d'une unité de commande externe, dans lequel ladite unité de commande interne est l'une quelconque d'une unité de commande de système de gestion du moteur (EMS) et d'une unité de contrôle du moteur (ECU), et dans lequel ladite unité de commande externe est une unité de commande interfacée extérieurement avec ledit dispositif de commande (110).

6. Procédé d'adaptation au vieillissement d'un capteur de changement de rapport rapide (102) dans un véhicule, ledit véhicule comprenant ledit capteur de changement de rapport rapide (102) monté sur l'un quelconque d'une pédale de changement de rapport, d'un arbre de changement de rapport d'une boîte de vitesses et des liaisons entre ceux-ci, et un dispositif de commande (110) configuré pour recevoir un signal d'entrée provenant dudit capteur de changement de rapport rapide (102), comparer une valeur réelle détectée provenant dudit signal d'entrée à une valeur seuil pour l'une quelconque d'une demande de passage au rapport supérieur et d'une demande de passage au rapport inférieur, et déclencher une fonctionnalité de changement de rapport rapide, ladite fonctionnalité de changement de rapport rapide correspondant à une modulation de couple moteur par ledit dispositif de commande (110) sans désengager un embrayage entre un moteur et ladite boîte de vitesses dudit véhicule, **caractérisé en ce que** ledit procédé comprend les étapes suivantes :
la détection d'une condition d'absence de charge dudit capteur de changement de rapport rapide (102), et
la mesure de ladite valeur réelle provenant dudit capteur de changement de rapport rapide (102) lors de la détection de ladite condition d'absence de charge, et le calcul de l'écart entre ladite valeur réelle et une valeur de référence dudit capteur de changement de rapport rapide (102), et
l'adaptation de ladite valeur de référence et de ladite valeur seuil en fonction dudit écart calculé.

7. Procédé selon la revendication 6, dans lequel ladite condition d'absence de charge comprend un cycle de post-conduite dudit véhicule, dans lequel la détection dudit cycle de post-conduite est réalisé en surveillant un événement de coupure du contact dudit véhicule.

8. Procédé selon la revendication 7, dans lequel ladite condition d'absence de charge comprend en outre au moins un élément choisi parmi un groupe comprenant une position de rapport à une position neutre, un état de béquille latérale/béquille principale activé et une vitesse de véhicule nulle, dans lequel ladite position de rapport est détectée par un capteur de position de rapport (104), ledit état de béquille est détecté par un capteur de commutateur de béquille (106) et ladite vitesse de véhicule est détectée par un capteur de vitesse (108).

9. Procédé selon la revendication 6, comprenant le traitement d'une pluralité desdites valeurs réelles ensemble avant l'adaptation de ladite valeur de référence et de ladite valeur seuil, dans lequel ladite pluralité de valeurs réelles sont stockées dans un élément de mémoire (112) dudit dispositif de commande (110).

10. Procédé selon la revendication 6, étant réalisé par au moins l'une d'une unité de commande interne et d'une unité de commande externe, dans lequel ladite unité de commande interne est l'une quelconque d'une unité de commande de système de gestion du moteur (EMS) et d'une unité de contrôle du moteur (ECU), et dans lequel ladite unité de commande externe est une unité de commande interfacée extérieurement avec ledit dispositif de commande (110).
